## Europäisches Patentamt

## European Patent Office

## Office européen des brevets

(11) Veröffentlichungsnummer: **0 252 011**
**A1**

# (12) EUROPÄISCHE PATENTANMELDUNG

(21) Anmeldenummer: **87810364.7**

(22) Anmeldetag: **25.06.87**

(51) Int. Cl.⁴: **H 02 K 37/00**
**H 02 P 8/00**

(30) Priorität: **02.07.86 CH 2663/86**

(43) Veröffentlichungstag der Anmeldung:
**07.01.88 Patentblatt 88/01**

(84) Benannte Vertragsstaaten:
**CH DE FR GB IT LI SE**

(71) Anmelder: **Hasler AG**
**Belpstrasse 23**
**CH-3000 Bern 14 (CH)**

(72) Erfinder: **Burri, Markus**
**Orpundstrasse 61**
**CH-2504 Biel (CH)**

**Herczeg, Karoly**
**Eyweg 8**
**CH-3032 Hinterkappeien (CH)**

**Kapetanovic, Amir**
**Route du Bugnon 14/III**
**CH-1752 Villars-sur-Glâne (CH)**

**Schärer, Walter**
**Eigermatte 50**
**CH-3110 Münsingen (CH)**

(74) Vertreter: **Schwerdtel, Eberhard, Dr.**
**c/o Hasler AG Belpstrasse 23**
**CH-3000 Bern 14 (CH)**

(54) **Schrittmotorenantrieb mit Rückkopplung.**

(57) Der Antrieb umfasst einen Hybrid-Schrittmotor (10), einen hiermit baugleichen Sinusgenerator (24), einen Signaldetektor (25) und eine Schrittsteuerung (26). Die permanentmagnetischen Rotoren (13, 23) des Motors (10) und des Generators (24) sind auf einer gemeinsamen Achse (15) angeordnet. Der Signaldetektor (25) ist als Nulldurchgangsdetektor für die in den Statorwicklungen (21) des Generators (24) induzierten, sinusförmigen Spannungen (U) ausgebildet. Bei jedem Schritt des Motors (10) ergibt sich am Ausgang des Signaldetektors (25) ein Nulldurchgangssignal (a) zur Rückkopplung.

Der Motor (10) und der Generator (24) bilden zusammen eine kompakte, unkritische Baueinheit. Der Antrieb insgesamt findet bevorzugt Anwendung zum Transportieren und exakten Positionieren des Druckerkopfes bei Einzelzeichendruckern.

Fig.1

EP 0 252 011 A1

**Beschreibung**

Schrittmotorenantrieb mit Rückkopplung

Die Erfindung betrifft einen Schrittmotorenantrieb mit Rückkopplung entsprechend dem Oberbegriff von Anspruch 1.

Schrittmotoren sind elektromechanische Wandler zur Umsetzung digitaler, elektrischer Signale in mechanische Bewegungsschritte. Aufgrund der mechanischen Trägheit der Rotoren sind keine beliebig schnellen Änderungen der Schrittfolgen möglich. Dies führt vor allem bei raschem Anlaufen und Abbremsen der Motoren leicht zu ungünstigen Phasenlagen zwischen der jeweiligen Rotorstellung und den durch die Motoransteuerimpulse und die Motorgeometrie gegebenen Statorfeldern oder gar zu Nichtproportionalitäten zwischen der Zahl der Steuersignale und der Zahl der ausgeführten Schritte, was für viele Anwendungen unzulässig ist.

Es sind daher Rückmelder für Schrittmotoren bekannt, die entweder angeben, ob jeder initiierte Schritt auch ausgeführt wird, oder in welcher Winkelposition sich der Rotor jeweils befindet. Ein solcher Rückmelder ist beispielsweise als optisch arbeitender Winkelpositionsmelder ausgebildet, dessen Rotor mit der Rotorachse des Motors gekoppelt ist. Der zugehörige Stator umfasst einen Signalgeber, der aufgrund einer jeweiligen geeigneten optischen Gegebenheit ein elektrisches Ausgangssignal abgibt, und zwar an die Schrittsteuereinheit des Schrittmotors. Solche Winkelpositionsmelder sind relativ aufwendig und damit teuer. Sie müssen im allgemeinen winkelgerecht mit der Motorachse gekoppelt sein, was erhebliche Justierarbeit verursachen kann. Es besteht daher die Aufgabe, einen günstigeren Rückmelder anzugeben, so dass sich insgesamt ein unkritischer, billiger, rückgekoppelter Schrittmotorenantrieb ergibt. Diese Aufgabe wird gelöst durch die Merkmale des kennzeichnenden Teils von Anspruch 1. Die anderen Ansprüche geben Ausgestaltungen der Erfindung an.

Im folgenden wird die Erfindung anhand von vier Figuren beispielsweise näher beschrieben. Es zeigen:

    Fig. 1 - Blockschaltbild eines Schrittmotors mit Rückkopplung

    Fig. 2 - Schematische Darstellung zur Feststellung von Nulldurchgängen einer verrauschten Sinusspannung.

    Fig. 3 - Blockschaltbild eines ersten Signaldetektors

    Fig. 4 - Blockschaltbild eines zweiten Signaldetektors.

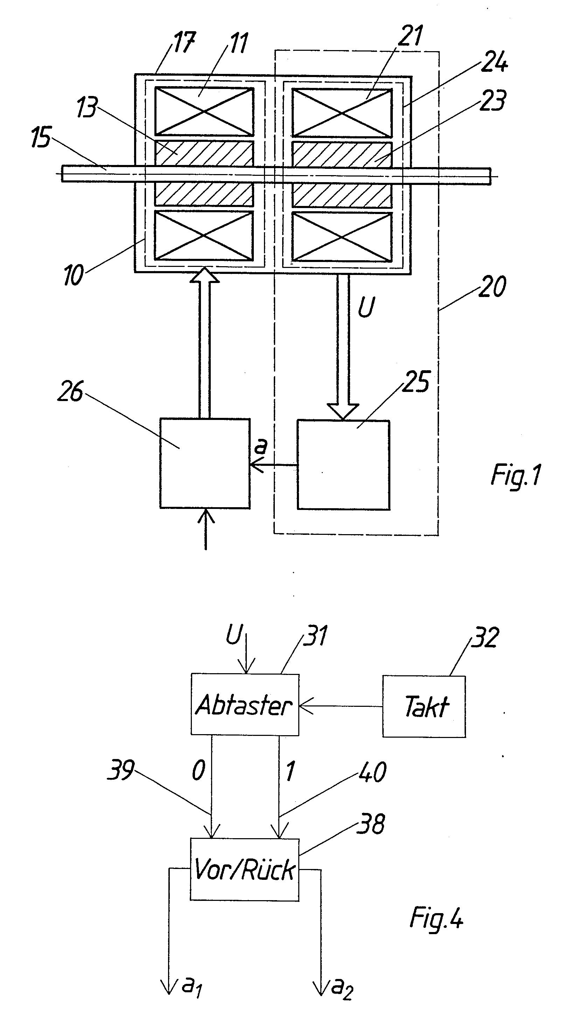

Fig. 1 zeigt einen Schrittmotorenantrieb mit einem Schrittmotor 10, einer Schrittsteuerung 26, und einem Rückmelder 20. Der Schrittmotor 10 ist ein Hybrid-Schrittmotor mit beispielsweise Schrittwinkeln von 3,6°. Er umfasst zwei gegeneinander um 90° versetzte Statorwicklungen 11, die durch die Schrittsteuerung 26 in bekannter Weise angesteuert werden, z.B. über eine Brückenschaltung. Weiter umfasst er einen auf einer Achse 15 angeordneten gezahnten Rotor 13.

Der Rückmelder 20 umfasst ebenfalls zwei (weitere) Statorwicklungen 21 und einen (weiteren) gezahnten Rotor 23, der auf der gleichen Achse 15 befestigt ist. Weiter umfasst er einen Signaldetektor 25.

Die Statorwicklungen 11 und 21 sowie die auf der Achse 15 gemeinsam befestigten Rotoren 13 und 23 sind bevorzugt in einem gemeinsamen Gehäuse 17 untergebracht und bilden, insbesondere wenn sie baugleich oder bauähnlich sind, im Grunde einen Doppelmotor. Der eine Teil (11, 13) dieses Doppelmotors wird wie beschrieben als Schrittmotor 10 verwendet, während der andere Teil des Doppelmotors als Sinusgenerator 24 dient. Dies bedeutet, dass bei Drehung der Achse 15 der Rotor 23 in jeder der ihm zugeordneten Statorwicklungen 21 eine annähernd sinusförmige Spannung U induziert. Der Signaldetektor 25 dient zur Bestimmung der jeweiligen Winkelposition des Rotors 23 und damit der Achse 15 und des Rotors 13 aus diesen Spannungen U bzw. den induzierten Sinussignalen.

Der Signaldetektor 25 ist bevorzugt als Nulldurchgangsdetektor zum Feststellen des jeweiligen Nulldurchgangs jedes der Sinussignale ausgebildet. Hierzu kann er als Spannungsdetektor aufgebaut sein, der die jeweiligen induzierten Spannungen U mit einer Nullreferenzspannung vergleicht und jeweils bei verschwindender Spannungsdifferenz ein Ansprechsignal a an die Schrittsteuerung 26 abgibt. Eventuelles störendes Geräusch, das die Sinussignale überlagert, kann durch ein geeignetes Filter beseitigt werden. Es ist klar, dass für jede der Statorwicklungen 21 des Generators 24 ein separater solcher Detektor 25 vorzusehen ist.

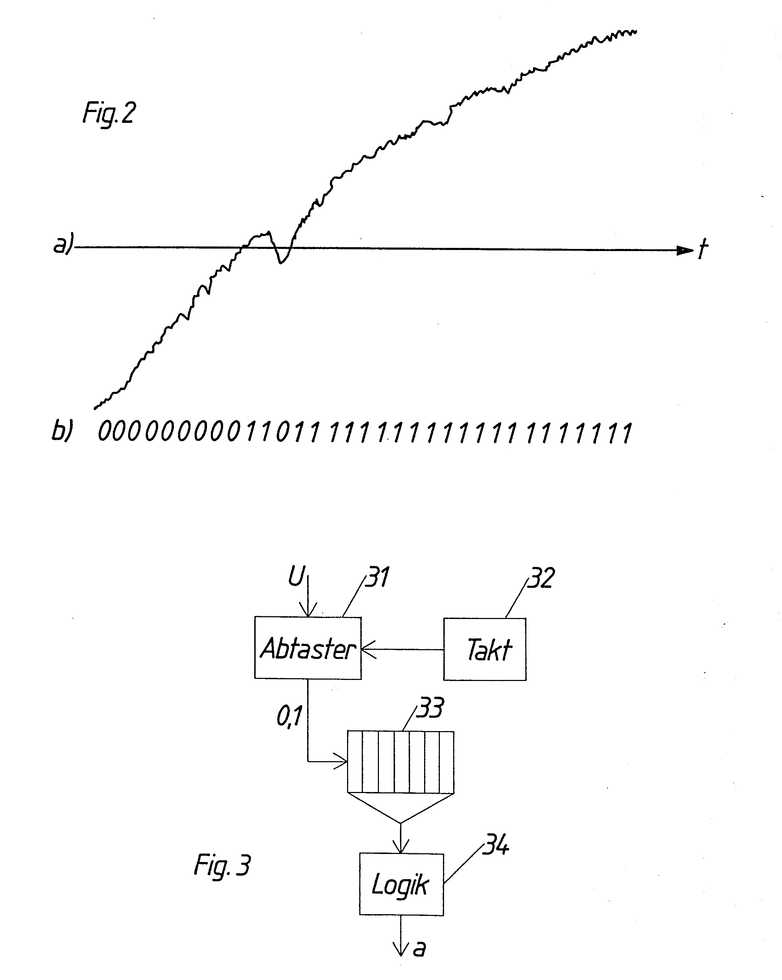

Anhand von Fig. 2 wird ein weiterer, digital arbeitender Signaldetektor 25 beschrieben. Dieser tastet mit einem starren Abtasttakt die von Geräusch überlagerte Sinusspannung U ab (Fig. 2a), und zwar mit einer Taktfrequenz, die gross ist gegenüber den auftretenden Frequenzen der Sinusspannung U. Bei positiver Abtastspannung gibt er als Abtastwert z.B. logisch 1 ab, bei negativer Abtastspannung logisch 0. Er bildet damit entsprechend Fig. 2b eine Folge von Abtastwerten 0, 1, die ständig daraufhin untersucht wird, ob die momentane Zahl der Werte 0 oder der Werte 1 überwiegt. Ein genereller Wechsel in der Häufigkeitsverteilung der Werte zeigt schnell und einwandfrei einen Nulldurchgang der Sinusspannung U an, während einzelne durch das Geräusch entstandene "Fehlabtastungen" unberücksichtigt bleiben und damit eliminiert werden. Bei zwei Statorwicklungen 21 umfasst der Signaldetektor 25 zwei solche Nulldurchgangsdetektoren.

Fig. 3 zeigt eine erste Version des Signaldetektors 25. Die zu überwachende Sinusspannung U wird in einem Abtaster 31 im starren Takt einer Taktquelle 32 digitalisierend abgetastet. Die entstehende Folge logischer Abtastwerte 0, 1 läuft in ein Schieberegister 33 mit einer ungeraden Anzahl Registerplätze, z.B. sieben, ein. Parallel zum Register 33 ist eine Vergleichslogik 34 angeordnet, die laufend überprüft, welche Sorte der momentan im Schieberegister 33 enthaltenen Abtastwerte jeweils überwiegt. Die Vergleichslogik 34 kann entweder eine festverdrahtete Logik aus UND- und ODER-Gliedern sein oder ein Zähler mit Zählsteuerung, der nach jeder Eingabe eines Abtastwertes den Inhalt des ganzen Schieberegisters 33 einmal durchschiebt und dabei die jeweilige Zahl der Werte 0 und der Werte 1 feststellt. Sobald ein genereller Wechsel in der Häufigkeitsverteilung der Abtastwerte 0, 1 auftritt, wird das Ansprechsignal a abgegeben.

Fig. 4 zeigt eine andere Version des Signaldetektors 25. Dieser umfasst einen Vor/Rück-Zähler 38, z.B. mit sechs Zählpositionen, der beim Überlaufen in beiden Richtungen jeweils seinen jeweiligen Extremzählwert unverändert beibehält. In den einen Zähleingang 39 dieses Zählers werden die einen und in den anderen Zähleingang 40 werden die anderen Abtastwerte eingegeben, z.B. zugeordnet 0 bzw. 1. Der Vor/Rück-Zähler 38 gibt jeweils solange ein seinem jeweiligen einen Extremzählwert zugeordnetes erstes Ausgangssignal $a_1$ bzw. $a_2$ ab, bis der jeweils andere Extremzählwert erreicht wird. Auch bei dieser Version des Signaldetektors 25 werden dauerhafte Wechsel von Abtastwerten 0 zu 1 und umgekehrt schnell und sicher erkannt und als Nulldurchgang der Spannung U angezeigt, während einzelne Falschwerte ignoriert werden.

In jeder Statorwicklung 21 des Generators 24 wird bei jedem Schritt des Rotors 23 und damit der Achse 15 eine Spannung U induziert. Diese Spannungen U beginnen, wenn es sich um ein Anlaufen aus dem Stillstand handelt, beim Spannungswert Null. Rotiert der Rotor 23 dagegen schon mit einer gewissen Geschwindigkeit, dann weisen die Spannungen U in jeder der Statorwicklungen 21 für jeweils zwei Schritte einen Nulldurchgang auf. Bei zwei Statorwicklungen 11, 21 des Schrittmotors 10 und des Signalgenerators 24 (wie beschrieben) ergeben sich somit für jeden Zyklus von vier Schritten entsprechend der Drehung der Rotoren 13, 23 um einen Zahn insgesamt vier Nulldurchgänge, im allgemeinen also eine der Zahl der Ansteuerimpulse genau entsprechende Anzahl. Jedem Ansteuerimpuls ist somit im allgemeinen ein Nulldurchgang zugeordnet, wobei eine eindeutige Winkel- bzw. Phasenabhängigkeit gegeben ist. Diese Abhängigkeit hängt vor allem ab von der gegenseitigen Ausrichtung der Zähne der Rotoren 13, 23 und der Zähne der zugeordneten Statoren, also von der inneren und gegenseitigen Geometrie des Motors 10 und des Generators 24.

Die Spannung U weist bei absolut gleichförmiger Geschwindigkeit den zeitlichen Verlauf einer Sinusfunktion auf. Im praktischen Fall und insbesondere beim Anlaufen des Motors 10 ergeben sich aber natürlich Abweichungen von der genannten Idealform.

Aufgrund der festen Winkel- bzw. Phasenabhängigkeit zwischen den jeweiligen Schrittsteuerbefehlen und den festgestellten Nulldurchgängen der induzierten Spannungen U lassen sich Beschleunigungs- und Bremsphasen des Motors 10 über die Rückkopplung und die Schrittsteuerung 26 optimal steuern.

Der beschriebene Rückmelder 20 ist einfach im Aufbau und damit vergleichsweise billig. Durch die Anordnung der beiden Rotoren 13 und 23 auf einer gemeinsamen Achse 15 ist eine sehr kompakte Bauweise möglich. Die mechanischen Montagearbeiten für das Kombinieren des Schrittmotors 10 mit dem Winkelpositionsmelder lassen sich durch den Hersteller des Motors bei dessen Fertigung durch geeignete Vorkehrung relativ einfach vornehmen.

Der Schrittmotorenantrieb wurde geschildert anhand eines Hybrid-Schrittmotors 10 mit Schrittwinkeln von 3,6°. Selbstverständlich kann jeder andere Schrittwinkel vorgesehen sein, erzeugt durch eine entsprechend notwendige Zahl von Rotor- und Stator-Zähnen und/oder Zahl von Stator-Wicklungen. Oder es kann auch ein Schrittmotor mit ungezahntem Permanentmagnetrotor (PM-Motor) verwendet werden.

Die Anordnung mit zwei permanentmagnetischen Rotoren 13, 23 auf einer gemeinsamen Achse 15 bildet eine unkritische, kompakte Bauform. Bei dieser muss natürlich durch die Wahl der Materialien, z.B. Aluminium für das Gehäuse, und durch eventuelle sonstige Massnahmen dafür gesorgt sein, dass der Motor 10 und der Generator 24 sich möglichst wenig direkt und gegenseitig elektromagnetisch beeinflussen.

Vorteilhaft ist weiter die einfache Art der Phasendetektion der induzierten sinusförmigen Spannungen. Diese erfogt problemlos durch einfache elektronische, digital arbeitende Schaltkreise entsprechend Fig. 3 oder 4, wobei die jeweils auftretenden Amplituden der Spannungen U keinen Einfluss ausüben und wobei sowohl Nulldurchgänge in der einen als auch in der anderen Richtung gleichermassen erfasst werden.

Hierdurch ergibt sich insgesamt eine drastische Verbilligung für rückgekoppelte Schrittmotorantriebe, die damit preislich vergleichbar werden mit gesteuerten, d.h. nicht rückgekoppelten Antrieben. Der Schrittmotorantrieb findet bevorzugt Anwendung bei Einzelzeichendruckern zum Transportieren und exakten Positionieren des Druckerkopfes, beispielsweise bei einer Fernschreibmaschine mit Nadeldruckwerk.

**Patentansprüche**

1. Schrittmotorantrieb mit Rückkopplung, umfassend einen Schrittmotor (10) mit permanentmagnetischem Rotor (13), eine Schrittsteuerung (26), einen mit dem Rotor (13) gekoppelten Signalgenerator und einen Detektor für die Signale des Generators, dadurch gekennzeichnet, dass der Signalgenerator als induktiver Sinusgenerator (24) und der Detektor als Nulldurchgangsdetektor (25) für wenigstens eine vom Sinusgenerator (24) erzeugte etwa sinusförmige Spannung (U) ausgebildet ist.

2. Schrittmotorantrieb nach Anspruch 1, dadurch gekennzeichnet,

dass der Sinusgenerator (24) ein als Generator betriebener zweiter Schrittmotor mit wenigstens einer Statorwicklung (21) und mit einem zweiten permanentmagnetischen Rotor (23) ist.

3. Schrittmotorantrieb nach Anspruch 2, dadurch gekennzeichnet, dass der Sinusgenerator (24) als Hybrid-Schrittmotor mit gezahntem Permanentmagnetrotor (23) ausgebildet ist, der wenigstens zwei Statorwicklungen (21) aufweist, und dass jeder der Statorwicklungen (21) ein separater Nulldurchgangsdetektor (25) zugeordnet ist.

4. Schrittmotorantrieb nach Anspruch 3, dadurch gekennzeichnet, dass der Sinusgenerator (24) und der Schrittmotor (10) je als Hybrid-Schrittmotor mit gleich gezahnten Permanentmagnetrotoren (13, 23) und gleicher Anzahl von Statorwicklungen (11, 21) ausgebildet sind.

5. Schrittmotorantrieb nach Anspruch 4, dadurch gekennzeichnet, dass der Sinusgenerator (24) und der Schrittmotor (10) baugleich sind.

6. Schrittmotorantrieb nach Anspruch 2, dadurch gekennzeichnet, dass der Schrittmotor (10) und der Sinusgenerator (24) eine kompakte Einheit bilden, die eine einzige Achse (15) aufweist, auf der die beiden Rotoren (13, 23) gemeinsam und starr angeordnet sind.

7. Schrittmotorenantrieb nach Anspruch 6, dadurch gekennzeichnet, dass der Schrittmotor (10) und der Sinusgenerator (24) elektromagnetisch voneinander entkoppelt sind.

8. Schrittmotorantrieb nach Anspruch 1, dadurch gekennzeichnet, dass der Nulldurchgangsdetektor (25) ein Spannungsmesser ist, der die Spannung (U) des Signalgenerators (24) abgreift und der jeweils beim Erreichen des Spannungswertes Null anspricht und ein Ansprechsignal (a) an die Schrittsteuerung (26) abgibt.

9. Schrittmotorantrieb nach Anspruch 1, dadurch gekennzeichnet, dass der Nulldurchgangsdetektor (25) eine digitale Schaltungsanordnung mit einer Abtasteinrichtung (31) ist, die die Spannung (U) mit einer starren Taktfrequenz abtastet und bei positivem Spannungswert einen ersten logischen Abtastwert (z.B. logisch 1) und bei negativem Spannungswert einen zweiten logischen Abtastwert (z.B. logisch 0) erzeugt, die die entstehende Folge der Abtastwerte (0, 1) ständig daraufhin untersucht, welche Sorte der Abtastwerte (0, 1) momentan überwiegt, und die bei jedem generellen Wechsel in der Häufigkeitsverteilung der Abtastwerte (0, 1) ein Ansprechsignal (a) an die Schrittsteuerung (26) abgibt.

10. Schrittmotorantrieb nach Anspruch 9, dadurch gekennzeichnet, dass der Nulldurchgangsdetektor (25) ein Schieberegister (33) umfasst, in das die Folge der Abtastwerte (0, 1) eingelesen wird, und eine Vergleichslogik (34), die laufend überprüft, welche Sorte der Abtastwerte (0, 1) momentan im Schieberegister (33) überwiegt.

11. Schrittmotorantrieb nach Anspruch 9, dadurch gekennzeichnet, dass der Nulldurchgangsdetektor (25) einen Vor/Rück-Zähler (38) umfasst, in dessen einen Zähleingang (39) die einen Abtastwerte (0) und in dessen anderen Zähleingang (40) die anderen Abtastwerte (1) eingegeben werden, und der jeweils solange ein dem einen Extremzählwert zugeordnetes Ausgangssignal ($a_1$, $a_2$) abgibt, bis der jeweils andere Extremzählwert erreicht wird.

0252011

Fig.1

Fig.4

0252011

Fig.2

a) ——————————————————————————————————→ t

b)  000000000011011 1111111111111111111

U   31                    32

Abtaster  ←———  Takt

0,1      33

Logik    34

a

Fig. 3

**Europäisches Patentamt**

# EUROPÄISCHER RECHERCHENBERICHT

Nummer der Anmeldung

EP 87 81 0364

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C-1 149 447 (HORSTMANN CLIFFORD MAGNETICS LTD.) * Spalte 3, Zeile 67 - Spalte 6, Zeile 65; Figuren 1, 2, 3, 4 * | 1-7 | H 02 K 37/00 H 02 P 8/00 |
| | --- | | |
| A | FR-A-2 556 897 (PRECILEC) * Seite 4, Zeile 34 - Seite 6, Zeile 23; Figuren 1-4 * | 1-3,6, 7 | |
| | --- | | |
| A | EP-A-0 182 322 (KABUSHIKI KAISHA S.G.) * Seite 22, Zeile 21 - Seite 24, Zeile 3; Figur 17 * | 9-11 | |
| | ----- | | |

| RECHERCHIERTE SACHGEBIETE (Int. Cl.4) |
|---|
| H 02 K 37/00 |
| H 02 K 16/00 |
| H 02 K 29/00 |
| H 02 K 7/00 |
| H 02 P 8/00 |

Der vorliegende Recherchenbericht wurde für alle Patentansprüche erstellt.

| Recherchenort | Abschlußdatum der Recherche | Prüfer |
|---|---|---|
| BERLIN | 08-10-1987 | WEIHS J.A. |